# EUROPÄISCHE PATENTSCHRIFT

(11) **EP 3 123 401 B1**
(45) Veröffentlichungstag und Bekanntmachung des Hinweises auf die Patenterteilung: **30.09.2020**
(21) Anmeldenummer: 15712100.5
(22) Anmeldetag: 18.03.2015
(51) Int. Cl.: G06K 19/06

(54) **AUTHENTIFIKATIONSSYSTEM**
AUTHENTICATION SYSTEM
SYSTÈME D'AUTHENTIFICATION

(30) Priorität: 27.03.2014 DE 102014004349
(43) Veröffentlichungstag der Anmeldung: 01.02.2017
(73) Patentinhaber: Kisters, Friedrich, 8280 Kreuzlingen (CH)
(72) Erfinder: Kisters, Friedrich, 8280 Kreuzlingen (CH)
(74) Vertreter: Patentanwälte Dr. Keller, Schwertfeger Partnerschaft mbB
(86) Internationale Anmeldenummer: PCT/EP2015/055626
(87) Internationale Veröffentlichungsnummer: WO 2015/144511

(56) Entgegenhaltungen:
- EP-A1- 1 158 459
- GB-A- 2 265 482

## Beschreibung

### Technisches Gebiet:

Die vorliegende Erfindung betrifft ein Authentifikationssystem zur Authentifikation und/oder Identifikation von Personen, Gegenständen, Dienstleistungssystemen oder datenbasierten Medien, wie Datenspeichern oder Computerprogrammen, bei denen ein für die Person, den Gegenstand, das Dienstleistungssystem oder das datenbasierte Medium charakteristisches statisches, sich nicht veränderndes Sicherheitsmerkmal entweder neu geschaffen oder ein bestehendes genutzt wird, welches anschließend durch die Hinzunahme nicht vorherbestimmbarer Faktoren verändert und dadurch in ein dynamisches Sicherheitsmerkmal umgewandelt wird.

### Stand der Technik:

Viele der bekannten Authentifizierungseinrichtungen basieren auf starren Sicherheitsmerkmalen, bei denen beispielsweise eine PIN-Nummer, ein biometrisches Merkmal (z.B. Fingerabdruck), ein Code oder ein Passwort einem bestimmten Nutzer zugeordnet wird. Bei Dienstleistungssystemen sind Zugangsbeschränkungen auf bestimmte Nutzerkreise die Regel und erfordern umfangreiche Sicherheitsmaßnahmen, um die damit in Verbindung stehenden sensiblen Daten der Teilnehmer abzusichern.

Üblicherweise basieren Authentifizierungseinrichtungen auf einer vorherigen Registrierung, bei der die Identität eines Nutzers vor dem ersten Zugang der Anwendung durch Eingabe von Nutzerdaten hinterlegt wird. Im Stand der Technik werden unterschiedliche Authentifizierungsmethoden unterschieden, wobei die Faktoren das Wissen (z.B. Passwort), den Besitz (z.B. eine Zugangskarte) und persönliche Eigenschaften des Nutzers (z.B. Fingerabdruck, Unterschrift) umfassen.

Weiterentwicklungen dieser Technologien sehen beispielsweise vor, dass kleine tragbare Einrichtungen gültige Passwörter über einen Algorithmus und einen Authentifizierungs-Server zeitgleich generieren und auf einem Display anzeigen. Diese Passörter enthalten zumeist längere Zahlenreihen, die korrekt eingegeben werden müssen. Viele dieser Verfahren können jedoch einfach manipuliert oder umgangen werden. Passwortgestützte Authentifizierungssysteme sind äußerst sicherheitsanfällig, da Datenübertragungen abgehört und damit gehackt werden können.

Verfahren, welche eine biometrische Erfassung von Merkmalen des Nutzers umfassen, wie beispielsweise einen Fingerabdruck oder einen Iris-Scan des Nutzers, arbeiten nicht immer zuverlässig und sind zudem auch vor potentiellen Angreifern nicht sicher, da die biometrischen Daten sich nicht verändern und damit kopierbar sind.

Ein Beispiel für die Übertragung von Sicherheitsmerkmalen in einem Netzwerksystem ist in der DE 10 2011 055 297 B4 beschrieben. Dabei sind die Sicherheitsmerkmale in einer autonomen Authentifizierungsvorrichtung getrennt von dem Applikationsserver gespeichert. Nachteilig bei dem Verfahren ist jedoch, dass es sich hierbei um unflexible Sicherheitsmerkmale handelt, die kopiert werden können.

Ein anderer Weg wird in der WO 2013/191913 A1 verfolgt. Darin wird ein dreidimensionaler Code beschrieben, der eine Struktur oder ein Profil in X-, Y- und Z-Richtung aufweist. In der Struktur sind Informationen kodiert. Dabei werden unterschiedliche Parameter der Strukturen, wie z.B. die Höhe, die Breite oder die Tiefe, sowie die Form der Elemente herangezogen, um Informationen zu kodieren. Die darin enthaltenen Codes können ferner weitere Informationen enthalten, beispielsweise konventionelle Codes wie Bar-Codes oder QR-Codes. Auch hier ist die Struktur, wenn auch zweidimensional, vorgegeben und ändert sich nicht. Eine Änderung der Struktur würde zwangsläufig eine Löschung oder Veränderung der darin codierten Informationen mit sich bringen und wäre unerwünscht. So lassen sich auch diese 3-D-Strukturen sehr leicht von einem Angreifer umgehen.

In der DE 10 2010 009 977 A1 ist ein Sicherheitselement für Sicherheitspapiere, Wertdokumente und andere Datenträger, mit einer Farbschicht mit magnetisch ausgerichteten Magnetpigmenten beschrieben, die ein Motiv in Form von Mustern, Zeichen oder einer Codierung bilden, das beim Kippen des Sicherheitselements einen dynamischen Bewegungseffekt zeigt. Gemäß dieser Variante ist bei einem gattungsgemäßen Sicherheitselement das erste, dynamische Motiv der magnetisch ausgerichteten Magnetpigmente mit einem durch Einwirkung von Laserstrahlung erzeugten zweiten, statischen Motiv in Form von Mustern, Zeichen oder einer Codierung kombiniert, dessen ortsfester Umriss bei der Betrachtung einen ortsfesten Bezugspunkt für das dynamische Motiv bildet.

Daneben sind Sicherheitselemente bekannt, bei denen Oberflächenstrukturen oder Materialstrukturen, die Bestandteil eines Sicherheitselements, eines Gegenstands oder einer Person sind, nutzbar gemacht werden. In der WO 2011/006640 werden beispielsweise topographische Strukturen in Form von Krakelees als Sicherheitsmerkmal genutzt.

In der EP 1 158 459 A1 wird ein Authentifikationsverfahren für Gegenstände beschrieben, bei dem ein Stoff zur Erzeugung eines Sicherheitsmerkmals bereitgestellt und einem Gegenstand zugeordnet wird. Das Erscheinungsbild des Stoffes wird zu einem ersten Zeitpunkt erfasst und in einem Speichermittel gespeichert. Zur Authentifikation wird das Erscheinungsbild des Stoffes mit dem in dem Speichermittel hinterlegten Erscheinungsbild verglichen. Anschließend wird das Erscheinungsbild des Stoffes beispielsweise durch Einstrahlung von IR- oder UV-Licht aktiv verändert, so dass die daraus entstehende Struktureigenschaft (eine sich zeitlich verändernde Lumineszenz) unvorhersehbar ist. Zu einem weiteren Zeitpunkt wird das Erscheinungsbild des Stoffes erneut erfasst und das so erhaltene aktuelle Erscheinungsbild mit dem im Speichermittel hinterlegten verglichen. Der Gegenstand ist dann positiv authentifiziert, wenn sich der Stoff gegenüber dem in dem Speichermittel hinterlegten Erscheinungsbild zwischen den beiden Zeitpunkten zumindest teilweise verändert hat. Bei dem Verfahren werden somit Kurvenformen der gemessenen zeitabhängigen Lumineszenz als authentifizierendes Merkmal verglichen, wobei ein Punkt zu Punkt-Vergleich der Lichtzerfallskurve mit der im Speichermittel hinterlegten Referenzkurze durchgeführt wird.

In der DE 10 2008 050 768 B3 wird ein Sicherheitsmerkmal auf Basis Lumineszenz emittierender Stoffe sowie ein Verfahren beschrieben, wobei das Sicherheitsmerkmal durch erste Lumineszenz emittierende Stoffe sowie zweite Lumineszenz emittierende Stoffe gebildet wird. Die erste Lumineszenz ist breitbandig, während die zweite Lumineszenz schmalbandig ist. Der visuelle Farbeindruck des Sicherheitsmerkmals und die Gesamtintensität der Lumineszenz werden bei Anregung der emittierenden Stoffe zur Lumineszenz erfindungsgemäß durch spektral breitbandige erste Lumineszenz bestimmt.

Die GB 2 265 482 A betrifft eine Anordnung und ein Verfahren zum Übertragen von Daten, insbesondere zur sicheren Übertragung von numerischen Codes, beispielsweise zur Fernsteuerung einer Kraftfahrzeugeinbruchmeldeanlage. Dabei wird ein Radiosignal in Form eines Codes gesendet und über einen Empfänger empfangen, was dazu führt, dass in dem Kraftfahrzeug ein Alarm ausgelöst wird. Bei jeder Übertragung wird ein unterschiedlicher Code verwendet.

### Darstellung der Erfindung:

Vor diesem Hintergrund ist es Aufgabe der vorliegenden Erfindung ein verbessertes Authentifikationssystem bereitzustellen, das die Sicherheitsanforderung bei der Durchführung einer Authentifizierung einer Person, eines Gegenstandes, eines Dienstbereitstellungssystems oder eines datenbasierten Mediums zusätzlich erhöht und einen nicht autorisierten Zugriff verhindert.

Diese Aufgabe wird gelöst durch ein Authentifikationssystem mit den Merkmalen des Anspruchs 1.

Das erfindungsgemäße Authentifikationssystem umfasst ein Sicherheitselement mit sich dynamisch verändernden oder veränderbaren Sicherheitsmerkmalen, das einer bestimmten Person, einem Gegentand oder Medium zugeordnet ist. Das Sicherheitselement besteht aus einer sich verändernden oder veränderbaren Oberfläche, Struktur, Zusammensetzung, Volumen oder Zeichenfolge, die/das über eine Abtastvorrichtung erfassbar und über eine Kommunikationseinrichtung zu einer Auswerteeinrichtung übermittelbar ist. Die Oberfläche, die Struktur, das Volumen oder die Zusammensetzung kann beliebig sein und Bestandteil eines Gegenstands, eines Mediums oder eines Materials sein (beispielsweise ein Polymer-Kunststoff oder Harz). Charakteristisch ist, dass der Gegenstand eine Oberfläche, eine innere oder äußere Struktur, ein Volumen oder eine Stoffzusammensetzung aufweist, die für eine Abtasteinrichtung ein spezifisches Erscheinungsbild liefert. Hierzu eignen sich beispielsweise Strukturen oder Profile. Aber auch die chemische Zusammensetzung eines Stoffgemisches, beispielsweise eines Gemisches mit Farbpigmenten kann als dynamisch veränderndes Sicherheitsmerkmal herangezogen werden. Das erfindungsgemäße Sicherheitselement ist einer bestimmten Person, einem Gegenstand, einem Medium oder einer Gruppe von diesen über ein Zuordnungsmittel zugeordnet. Das Zuordnungsmittel kann beispielsweise eine Tabelle einer Datenbank sein. Dabei kann in einer bevorzugten Variante vorgesehen sein, dass das digitale Erscheinungsbild des Sicherheitselementes der erfindungsgemäßen Authentifikationsvorrichtung auf mehreren, physisch voneinander getrennten Speichermedien hinterlegt ist, was die Sicherheit zusätzlich erhöht. Ferner ist ein lokales oder zentrales Speichermittel zum Hinterlegen des Sicherheitsmerkmals vorgesehen.

Als Speichermittel eignet sich jedes analoge oder digitale Speichermittel (z.B. Magnetdatenträger, Flash-Speicher), mit dem das Sicherheitsmerkmal oder ein Erscheinungsbild davon (z.B. Scan, Lichtbild, Grafik) hinterlegt werden kann. Vorzugsweise wird das Sicherheitsmerkmal in digitaler Form in dem lokalen oder zentralen Speichermittel hinterlegt.

Ein lokales Speichermittel findet sich beispielsweise in einer mobilen Kommunikationseinrichtung wie einem Mobiltelefon. Ein zentrales Speichermittel ist beispielsweise Bestandteil einer Serverumgebung bei einem Dienstleistungsanbieter. Das Authentifikationssystem umfasst ferner eine Abfrageeinrichtung zum Abrufen eines aktuellen Erscheinungsbildes des Sicherheitsmerkmals. Das Erscheinungsbild kann beispielsweise über eine Abtasteinrichtung oder eine optische Erfassungseinheit (z.B. eine Kameraeinheit) erzeugt werden. Ein Datenabgleichmittel dient dem Vergleich des abgerufenen Erscheinungsbildes mit dem in dem lokalen oder zentralen Speichermittel hinterlegten Erscheinungsbild des Sicherheitselementes. Das Erscheinungsbild ist vorzugsweise eine grafische Darstellung, ein Lichtbild oder ein digitales Erscheinungsbild des Sicherheitsmerkmals. Vorzugsweise erfolgt der Datenabgleich auf digitale Weise.

Die Veränderung des Sicherheitsmerkmals wird über ein inhärentes oder extremes Auslösemittel bewirkt, das Bestandteil des erfindungsgemäßen Authentifikationssystems ist. Ein inhärentes Auslösemittel bewirkt eine Veränderung des Sicherheitsmerkmals ohne äußere Einwirkung, beispielsweise durch eine chemische oder physikalische Reaktion, die bedingt ist durch eine Eigenschaft eines Stoffes, einer Stoffzusammensetzung oder eines bestimmten Materials. Ein inhärentes Auslösemittel ist beispielsweise eine chemische Komponente in einer Stoffzusammensetzung, die eine Farbveränderung in einer entsprechenden Stoffzusammensetzung bewirkt. Daneben sind auch physikalische Auslösemittel umfasst, die unmittelbar auf einen Gegenstand oder ein Material mit einer dynamisch veränderbaren Oberfläche, Struktur, Volumen oder Zusammensetzung einwirken. Sobald sich Änderungen der Oberfläche, Struktur, Volumen oder Zusammensetzung eines Sicherheitselementes verändert, ist es in der Regel auch über ein Messmittel messbar und eignet sich somit als dynamisches Sicherheitsmerkmal im Sinne der vorliegenden Erfindung. Ein externes Auslösemittel wirkt von außen auf das Sicherheitsmerkmal ein und führt zu dessen Veränderung. Die Veränderung kann dabei an oder in der Oberfläche, der Struktur, dem Volumen, der Zusammensetzung oder in einer Eigenschaft des Sicherheitselementes stattfinden. Vorzugsweise verläuft die Veränderung dynamisch, d.h. das Sicherheitselement oder dessen Erscheinungsbild verändert sich über die Zeit kontinuierlich oder sporadisch bei Anforderung einer Abfrage.

Die Veränderung des Sicherheitselementes kann für das menschliche Auge optisch wahrnehmbar oder unsichtbar sein. In bestimmten Ausführungsvarianten kann die Veränderung der Oberfläche, der Struktur, des Volumens oder der Zusammensetzung nur über entsprechende physikalische oder chemische Messeinrichtungen ermittelt werden. Sofern von diesem Sicherheitselement ein Erscheinungsbild erfasst und mit einem Speichermittel hinterlegt wird, kann es dem erfindungsgemäßen Authentifikationssystem dienen. In einer weiteren Ausführungsform kann vorgesehen sein, dass sich das Sicherheitselement bzw. dessen Erscheinungsbild nur dann verändert, wenn eine Abfrage durch die Abfrageeinrichtung erfolgt. Vorzugsweise ist das aktuelle Erscheinungsbild in digitaler Form für eine Abfrage durch die Abfrageeinrichtung verfügbar.

Das Auslösemittel ist gemäß der Erfindung ein physikalischer oder chemischer Parameter. Beispiele solcher Parameter sind Temperatur, Luftdruck, Luftfeuchtigkeit, die Farbänderung eines Farbstoffes, oder auch Parameter wie Reibung oder Bewegung. Vorzugsweise handelt es sich bei dem Auslösemittel um den Ladezustand einer Energiequelle, eine elektrische Spannung, eine messbare physikalische Größe der Umgebungsatmosphäre, ein bestimmtes Verhaltensmuster einer Person oder die Durchführung einer Finanztransaktion über ein Zahlungsmittel (z.B. einer Kreditkarte). Das Auslösemittel kann jedoch auch unmittelbar auf das Sicherheitselement einwirken, beispielsweise durch Ausübung einer Kraft und einer damit verbundenen Deformation des Körpers oder eines Teils davon.

Der Begriff "Medium" im Sinne der vorliegenden Erfindung soll breit aufgefasst werden und umfasst eine beliebige zu authentifizierende Sache, einschließlich Vorrichtungen, Systeme, Daten und Datenträger, Computerprogramme, Apparaturen und Dienstleistungen. Vorzugsweise handelt es sich bei dem Gegenstand um ein mobiles Kommunikationsgerät oder eine Computereinheit. Ferner eignet sich das Authentifikationssystem zur Authentifizierung eines Dienstbereitstellungssystems, beispielsweise eines Finanzbezahlungssystems, eines Bestellsystems oder einer sonstigen Dienstleistung eines Dienstleistungsanbieters. Schließlich kann mit dem Authentifikationssystem auch eine Software (beispielsweise eine App auf einem Smartphone) oder Daten authentifiziert werden. Daneben sind auch Zeichenfolgen wie z.B. Codes in dem Authentifikationssystem zur Authentifikation anwendbar. Diese können gegebenenfalls auch verschlüsselt werden, wobei die Verschlüsselung selbst auch dynamisch erfolgen kann.

In einer ersten Ausführungsform besteht das Sicherheitselement aus statischen, sich nicht veränderbaren Sicherheitsmerkmalen und sich dynamisch veränderbaren Sicherheitsmerkmalen. Die dynamischen Sicherheitsmerkmale verändern deren Profil, Struktur, Zusammensetzung, Volumen oder das Erscheinungsbild, wenn ein Auslösemittel einen neuen oder anderen physikalischen oder chemischen Wert erreicht. Vorzugsweise ist der Wert für die Aktivierung der Manipulation des Sicherheitselementes oder dessen Erscheinungsbildes zuvor festgelegt und in einer zentralen Datenbank hinterlegt. Beispielsweise kann vorgesehen sein, dass sich das Erscheinungsbild des Sicherheitselementes in Abhängigkeit des Ladezustands eines Akkumulators oder einer Batterie digital verändert.

In einer bevorzugten Variante besteht das Sicherheitselement aus einem dehnbaren Material, in dem dynamische Sicherheitsmerkmale wie Risse, Sprünge oder Ausnehmungen ausgebildet sind, deren Durchmesser oder Profil sich entsprechend der Dehnung, Schrumpfung oder Biegung des Materials verändert. So kann zu einem ersten Zeitpunkt eine erste Aufnahme eines Erscheinungsbildes eines solchen dynamischen Materials (z.B. eines Faltbandes) gemacht werden, bei der die einzelnen Risse und Sprünge noch einen kleinen Durchmesser aufweisen. Zum Teil sind die Risse und Sprünge noch nicht ausgebildet und nur schwer erkennbar. Wird das Faltband nun auseinander gezogen bzw. gestreckt, so vergrößern auch die entsprechenden Durchmesser der Risse und Sprünge, wodurch sich der Gesamteindruck des Materials deutlich verändert. Wird zu einem zweiten Zeitpunkt erneut eine Aufnahme dieses Erscheinungsbildes vorgenommen, so erhält man ein dynamisch verändertes Erscheinungsbild, was dem sich dynamisch veränderten Sicherheitsmerkmal entspricht.

Zur Authentifizierung ist vorgesehen, dass sich das Erscheinungsbild des ersten Zeitpunkts im Vergleich zum Erscheinungsbild des zweiten Zeitpunktes zumindest teilweise verändert hat. Sollten die beiden Zeitpunkte zu nahe beieinander liegen, so kann auch eine Zweitauthentifikation über eine alternative Authentifizierung (z.B. durch Eingabe eines PIN-Codes oder eines biometrischen Merkmals) erfolgen. In einer bevorzugten Variante kann eine aktive Veränderung des Sicherheitselementes oder dessen Erscheinungsbildes angefordert werden, bei der beispielsweise eine mechanische Manipulation des Sicherheitselementes erfolgt. Die mechanische Manipulation kann durch Krafteinwirkung erfolgen, die beispielsweise durch Bewegung ausgelöst wird.

In einer weiteren Ausführungsform weist das Sicherheitselement eine erste Oberfläche mit Zacken oder scharfen Kanten auf, die bei Bewegung um eine an dem Sicherheitselement ausgebildete Drehachse in eine benachbarte zweite Oberfläche greifen und deren Struktur verändern. Die Zacken oder scharfen Kanten der einen Oberfläche schneiden in das Material der zweiten Oberfläche. Vorzugsweise ist daher das Material der scharfen Kanten oder Zacken härter als das Material der zweiten benachbarten Oberfläche, damit die Änderungen der Struktur für die Abtasteinrichtung abtastbar sind. Die Erkennbarkeit der Struktur kann mit dem bloßen Auge eines Menschen erfolgen oder über eine spezielle Abtasteinrichtung (z.B. eine Infrarot-Einrichtung).

Vorzugsweise sind bei dem Sicherheitselement eine erste Oberfläche mit darin integrierten statischen Sicherheitsmerkmalen und eine zweite Oberfläche mit darin integrierten dynamischen Sicherheitsmerkmalen vorgesehen. Die Veränderung des dynamischen Teils kommt dadurch zustande, dass unterhalb der ersten Oberfläche des Sicherheitselementes eine starre Basis und unterhalb der zweiten Oberfläche des Sicherheitselementes eine flexible Basis ausgebildet ist. Die flexible Basis verändert bei Aktivierung durch das Auslösemittel die darüber liegenden dynamischen Sicherheitsmerkmale. Auch hier liegen unterschiedliche Erscheinungsbilder bei zwei Abfragezeitpunkten vor.

In einer weiteren Variante sind beim Sicherheitselement eine erste Oberfläche mit darin integrierten statischen Sicherheitsmerkmalen und eine zweite Oberfläche mit darin integrierten dynamischen Sicherheitsmerkmalen vorgesehen, wobei die erste Oberfläche mit einer Schutzschicht und die zweite Oberfläche mit einer Aktivierungsschicht überzogen sind. Die Schutzschicht verhindert, dass sich die Sicherheitsmerkmale des statischen Teils verändern, während die Aktivierungsschicht eine Veränderung der Sicherheitsmerkmale des dynamischen Teils bewirkt.

In einer weiteren Variante besteht das Sicherheitselement aus einem Material, in dem sich verformbare und/oder bewegbare Hohlräume und/oder partikuläre Körper befinden. Das geometrische Profil, die durch Bewegung zurückgelegte Strecke, Drehrichtung, Position und/oder das digital oder optisch erfasste Erscheinungsbild der Hohlräume und/oder partikulären Körper sind nach Aktivierung des Auslösemittels veränderbar. Vorzugsweise sind die Partikel in einem Körper angeordnet und können über eine Kraft bewegt oder verändert werden. Solche Kräfte umfassen beispielsweise Magnetkräfte, Gravitationskräfte oder auch Fliehkräfte, die durch Bewegung zustande kommen. Vorzugsweise handelt es sich bei den partikulären Körpern um magnetisierbare Partikel, die in einem Material oder einer Stoffzusammensetzung angeordnet sind. Die Bewegung, Drehrichtung und zurückgelegte Strecke lassen sich beispielsweise über Magnetkraft verändern. Durch die Umlagerung der Partikel und/oder der Hohlräume ändert sich das Erscheinungsbild, so dass das dynamische Sicherheitsmerkmal zwischen zwei Zeitpunkten, nämlich vor und nach der Aktivierung, in einer veränderten Version vorliegt.

In einer weiteren Variante umfasst das Sicherheitselement eine oder mehrere Oberflächen innerhalb einer dreidimensionalen Struktur. Bei der Struktur kann es sich um ein Labyrinth oder einen dreidimensionalen Code handeln, in dem auch weitere Informationen hinterlegt sind. Die starre Struktur des Codes dient hierbei der Hinterlegung der Information, während die sich verändernde dynamische Struktur als Sicherheitselement herangezogen wird. Somit ist es ausreichend, wenn nur ein Teil des 3-D-Codes zur Authentifizierung dient.

In einer weiteren Variante kann das Sicherheitselement eine Anordnung von mehreren Zeichen umfassen, deren Position, Drehrichtung, Größe, Form, Volumen und/oder Farbe durch das Auslösemittel veränderbar ist/sind. Auch in einer solchen Ausführungsform ändert sich das Erscheinungsbild zwischen zwei Zeitpunkten. Das erfindungsgemäße Authentifikationssystem eignet sich insbesondere für den Einsatz bei komplexen Strukturen, beispielsweise bei den Strukturen eines 3-D-Codes. Ein 3-D-Code kodiert in drei unterschiedlichen Richtungen Informationen. Dabei können einzelne Bereiche des 3-D-Codes als dynamisches Sicherheitsmerkmal reserviert sein. Auf diese Weise lässt sich der 3-D-Code über die Authentifikationseinrichtung identifizieren. So können einzelne Flächeninhalte der Struktur oder Profilbereiche des 3-D-Codes über das Auslösemittel dynamisch verändert werden. Die Veränderung kann entweder direkt am 3-D-Code selbst erfolgen oder bei einem Abbild des 3-D-Codes, welches beispielsweise in digitaler Form vorliegt. Hierbei würde das Auslösemittel eine digitale Veränderung des 3-D-Codes bewirken. Die Abtasteinrichtung erfasst die Bereiche, die zumindest teilweise dynamische Sicherheitsmerkmale enthalten. Das Datenabgleichmittel (z.B. eine softwarebasierte Anwendung) vergleicht das abgetastete Sicherheitsmerkmal oder Bereiche davon mit dem in dem Speichermittel hinterlegten Erscheinungsbild des Sicherheitsmerkmals. Haben sich bestimmte Bereiche des Sicherheitsmerkmals erwartungsgemäß weiterentwickelt, so liegt eine positive Authentifikation vor.

Die Veränderung der dynamischen Sicherheitsmerkmale kann entweder zufällig oder programmiert erfolgen. Zur Erhöhung der Sicherheit ist jedoch das Auslösemittel selbst dynamisch, d.h. es verändert sich auf eine Art und Weise, die nicht ohne weiteres bestimmbar oder vorhersehbar ist. Ist das Auslösemittel ein physikalischer Parameter, so kann zuvor bestimmt werden, dass eine Aktion, d.h. eine Veränderung der dynamischen Sicherheitsmerkmale des Sicherheitselementes, nur dann erfolgt, wenn bestimmte Bedingungen oder Parameter vorliegen. Diese Bedingungen können beispielsweise die Dauer oder Amplitude eines Impulses sein, der über Sensoren erfasst und an eine entsprechende Aktivierungseinrichtung übergeben wird. Die Aktivierungseinrichtung bewirkt letztendlich die physikalische Veränderung der dynamischen Sicherheitsmerkmale bzw. deren Erscheinungsbildes.

Das erfindungsgemäße Authentifikationssystem lässt sich somit anhand unterschiedlich aufgebauter Sicherheitselemente beschreiben. Die hier gezeigte Auswahl stellt lediglich einige Beispiele dar, die zeigen, wie das erfindungsgemäße Sicherheitselement aufgebaut sein kann. Im Gegensatz zu einem starren Sicherheitsmerkmal (z.B. die Hinterlegung eines Fingerabdrucks) erhöht die dynamische Veränderung von Sicherheitsmerkmalen die Sicherheit wesentlich, da die Art und Weise der Veränderung für einen Fälscher oder eine nicht autorisierte Person nicht nachvollziehbar oder nicht vorhersehbar ist. Das zuletzt hinterlegte Erscheinungsbild des Sicherheitselementes in der Authentifikationsvorrichtung und die durch ein Auslösemittel bedingte Manipulation der Sicherheitsmerkmale sind für einen Fälscher nicht bestimmbar.

### Kurze Beschreibung der Zeichnungen:

Die Erfindung wird in den nachfolgenden Zeichnungen näher erläutert.

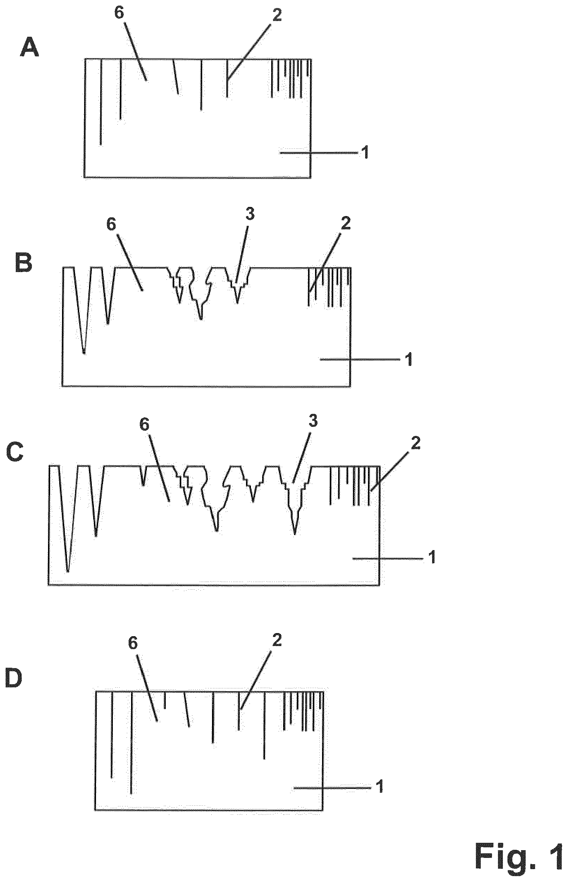

In den Figuren 1 bis 7 sind unterschiedliche Sicherheitselemente gezeigt, die Bestandteil des erfindungsgemäßen Authentifikationssystems sind. Diese Sicherheitselemente weisen dynamische, zum Teil aber auch starre Sicherheitsmerkmale auf, die durch ein inhärentes oder externes Auslösemittel beeinflusst und dadurch verändert werden können. Dadurch findet eine zumindest bereichsweise mechanische Veränderung einer Oberfläche, Struktur oder Eigenschaft des Sicherheitselementes statt. Durch die Veränderung entsteht ein dynamisch verändertes Sicherheitselement, welches als aktuelles Erscheinungsbild für eine Abfrage durch die Abfrageeinrichtung verfügbar ist. Digitale Erscheinungsbilder dieser Sicherheitselemente werden in einem Speichermittel, beispielsweise als Bestandteil einer Datenbank hinterlegt. Eine Abfrageeinrichtung ruft das aktuelle Erscheinungsbild des Sicherheitsmerkmals ab, und ein Datenabgleichmittel vergleicht das abgerufene Erscheinungsbild mit dem in dem lokalen oder zentralen Speichermittel hinterlegten Erscheinungsbild des Sicherheitselementes.

### Wege zur Ausführung der Erfindung und gewerbliche Verwertbarkeit:

In Fig. 1 ist ein Beispiel eines Sicherheitselementes 1 des erfindungsgemäßen Authentifikationssystems gezeigt. Es besteht aus einem Material mit einer Oberfläche 6, in der Risse, Furchen oder Ausnehmungen 2 vorhanden sind. Die Risse oder Ausnehmungen 2 werden umso größer, je mehr das Material gedehnt oder auseinander gezogen wird. In Fig. 1A ist der geschlossene Zustand gezeigt. Dieser Zustand ist zu einem ersten Abfragezeitpunkt als digitales Erscheinungsbild für ein Sicherheitsmerkmal 1 in dem Speichermittel hinterlegt. In Fig. 1B ist ein leichter Öffnungszustand gezeigt, bei dem die Strukturen und Profile, d.h. die dynamisch veränderbaren Sicherheitsmerkmale 3, deutlich erkennbar sind. Wird das Material (beispielsweise ein Polymerband) gedehnt, gestreckt oder auf andere Weise geöffnet (z.B. gebogen), so verändern sich auch die physikalischen Parameter, insbesondere der Durchmesser und der Öffnungswinkel der einzelnen Furchen, Risse und Ausnehmungen 2. Erkennbar ist jedoch auch, dass der Grundcharakter der einzelnen Risse, Furchen und Ausnehmungen 2, d.h. das äußere Erscheinungsbild, verwandt bleibt. Man vergleiche hierzu insbesondere Fig. 1C mit Fig. 1D. In dem weiter geöffneten Zustand des Materials gemäß Fig. 1C kommen weitere Risse, Furchen und Ausnehmungen 2 des dynamisch veränderbaren Sicherheitsmerkmals 3 hinzu. Wird nun die Datenbank mit den geänderten dynamischen Zuständen des Sicherheitselementes 1 aktualisiert, so muss das Sicherheitsmerkmal 1 aus dem zuvor hinterlegten Sicherheitsmerkmal 1 hervorgehen. Das Material muss sich entweder weiter geöffnet oder wieder verschlossen haben. In Fig. 1D ist wiederum der geschlossene Zustand gezeigt, bei dem jedoch einzelne Risse 2 als zusätzliche dynamische Sicherheitsmerkmale 3 hinzugekommen sind. Auf der äußersten rechten Seite des gezeigten Sicherheitsmerkmals 1 in Fig. 1A bis 1D befindet sich ein optionaler statischer Bereich, der das Sicherheitsmerkmal 1 markiert, ohne sich jedoch selbst zu verändern.

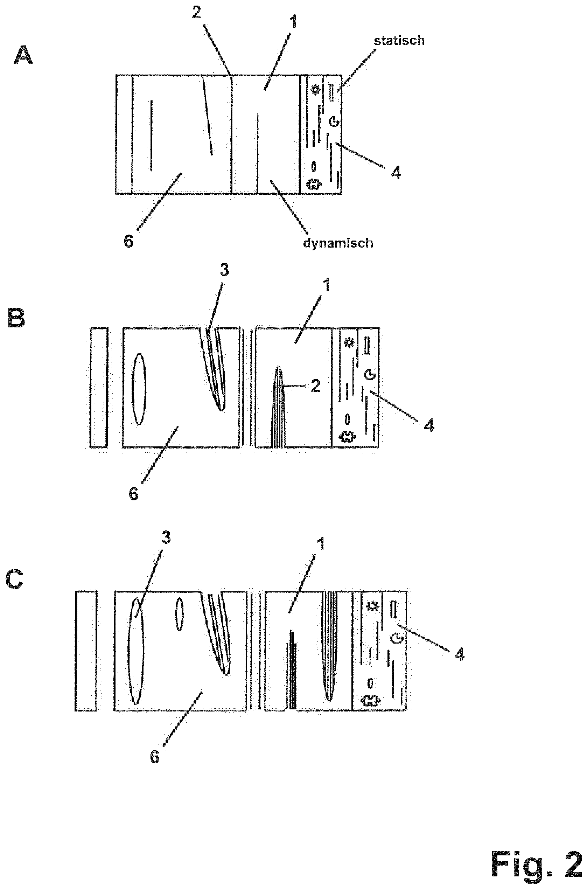

Fig. 2 zeigt die Aufsichtsdarstellung eines Sicherheitselementes 1 der erfindungsgemäßen Authentifikationseinrichtung, welches in Fig. 1 gezeigt ist. Das erfindungsgemäße Authentifikationssystem ermöglicht eine Abtastung von unterschiedlichen Seiten eines Sicherheitselementes. Während Fig. 1 eine Seitendarstellung eines Sicherheitselementes zeigt, ist in Fig. 2 eine Aufsichtsdarstellung gezeigt, die ein anderes Erscheinungsbild besitzt. Auf diese Weise lassen sich unterschiedliche Ansichten desselben Sicherheitselementes für einen oder mehrere Authentifikationsvorgänge nutzen. In der rechten Hälfte der Figur ist ein Beispiel gezeigt, bei dem starre geometrische Elemente in das Material eingearbeitet sind (vgl. Fig. 2A, rechts). Wird das Material gedehnt, d.h. geöffnet, so werden einzelne Strukturen, Risse oder Ausnehmungen 2 und somit die Oberfläche 6 als dynamische Sicherheitsmerkmale 3 in dem Material sichtbar (Fig. 2B). Bei noch einer weiteren Öffnung verändern sich diese Strukturen, und es kommen weitere Strukturen 2 hinzu (Fig. 2C). Die Beispiele in den Figuren 1 und 2 zeigen, dass je nach Darstellung (Querschnitt oder Aufsicht) ein Sicherheitselement 1 auch für verschiedene dynamische Veränderungen verwendet werden kann. So zeigt der Querschnitt des Sicherheitselementes 1 ein anderes Muster als beispielsweise dasselbe Sicherheitselement 1 in Aufsicht. Daneben ist noch ein statischer Teil als nicht veränderbares Sicherheitselement 4 vorgegeben. Diese Variationen lassen sich ausnützen. Außerdem ist das Sicherheitselement 1 in Würfelform oder eine andere geometrische Form gestaltbar und von verschiedenen Seiten auslesbar, wobei die Auswahl der Seiten (oder Teilen davon) und der entsprechenden sicherheitsrelevanten Bereiche statisch oder dynamisch erfolgt. Beispielsweise können einzelne Flächen einer geometrischen Struktur unterschiedliche Profile oder Farbgestaltungen aufweisen, die sich aufgrund äußerer oder innerer Einflüsse unvorhersehbar verändern und ausgelesen werden.

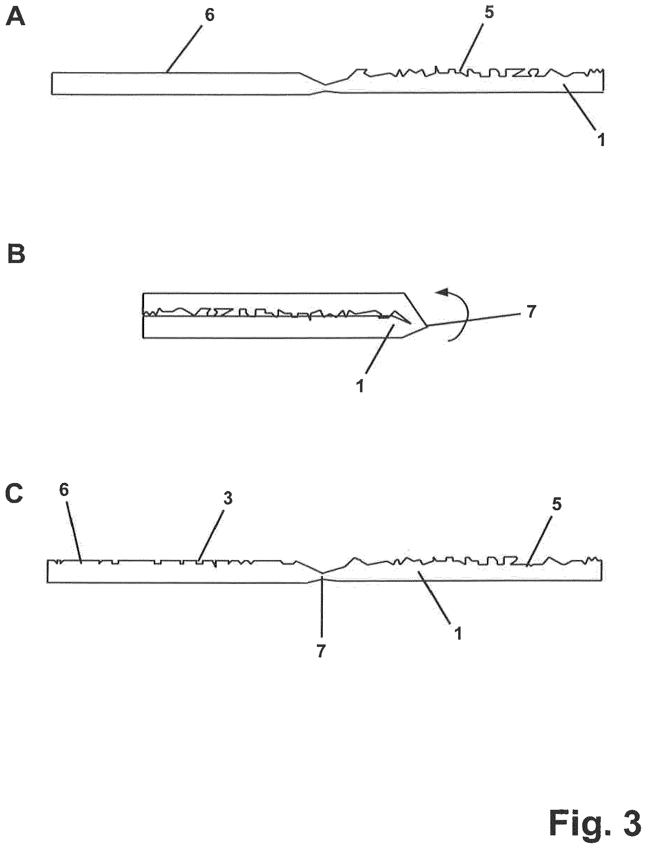

In Fig. 3 ist eine weitere Ausführungsvariante des Authentifikationssystems gezeigt. Hierbei handelt es sich um ein Sicherheitselement 1, bei dem zwei unterschiedliche Oberflächen 5, 6 ausgebildet sind. Die Oberfläche 6 auf der linken Seite charakterisiert zunächst den Ausgangszustand, d.h. die Oberfläche ist unbehandelt. Die rechte Oberfläche 6 des Sicherheitselementes 1 weist eine strukturierte Oberfläche mit Zacken und Kanten auf. Zur Erzeugung eines dynamischen Sicherheitsmerkmals 3 wird das Sicherheitselement 1 mit den beiden Hälften zusammengeführt. Durch das mechanische Zusammenführen der beiden Hälften arbeiten sich die Zacken und Kanten in das Material der unbehandelten Oberfläche 6, wodurch Materialeinprägungen, Reibungsstellen und Druckstellen entstehen (Fig. 3B). Wird das Sicherheitselement 1 mit den beiden Hälften erneut aufgeklappt, ist auf der linken Hälfte zu erkennen, wie sich die Kanten und Zacken der strukturierten Oberfläche eingearbeitet haben. Auf diese Weise entsteht aus einer vormals starren Oberfläche 5 eine strukturierte Oberfläche, die sich in der weiteren Entwicklung dynamisch verändern kann, indem nämlich weitere mechanische Einwirkungen erfolgen. Diese können beispielsweise ausgeführt werden, indem sich die beiden Oberflächen 5, 6 zueinander verschieben oder indem eine weitere Oberfläche 6 mit Kanten oder Zacken herangezogen wird, die bei einer mechanischen Schließung die dynamische Oberfläche verändern.

Daneben ist es auch möglich, dass sich die dynamische Hälfte verändert, indem die Kanten oder Zacken der strukturierten Oberfläche beispielsweise abgeflacht werden, wodurch sich die Struktur verändert. Somit können sowohl die linke als auch die rechte Hälfte der Oberfläche, sofern eine dynamische Änderung vorliegt, als dynamisches Sicherheitsmerkmal 3 verwendet werden.

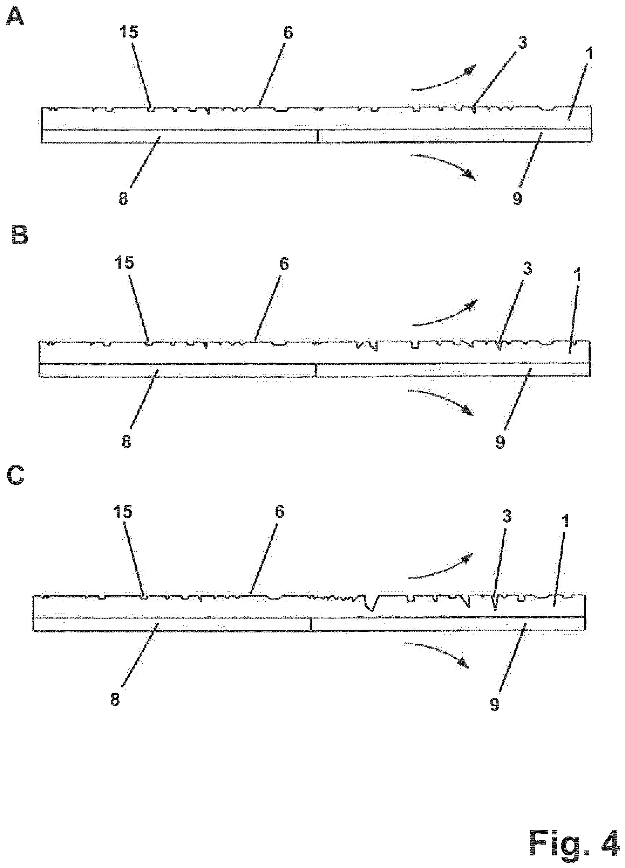

In Fig. 4 ist ein Sicherheitsmerkmal 1 mit einem starren Untergrund 8 und flexiblen Untergrund 9 gezeigt. Während der starre Untergrund 8 die darüber liegende Oberfläche 6 nicht verändert, führt der flexible Untergrund 9 zu einer Veränderung der Struktur der darüber liegenden Oberfläche. Die flexible Gestaltung des rechten, dynamischen Teils des Sicherheitselementes wird daher zu einer fortlaufenden Änderung der an der Oberfläche ausgebildeten Strukturen, wodurch ein dynamisches Sicherheitsmerkmal 3 geschaffen wird. Durch die Einwirkung des flexiblen Untergrunds 9 auf die darüber liegende Oberfläche wird die darin ausgebildete Struktur stetig verändert oder bereits ausgebildete Strukturen verstärken sich, was beispielsweise anhand des Vergleiches der Profile der Fig. 4A, 4B und 4C zu sehen ist.

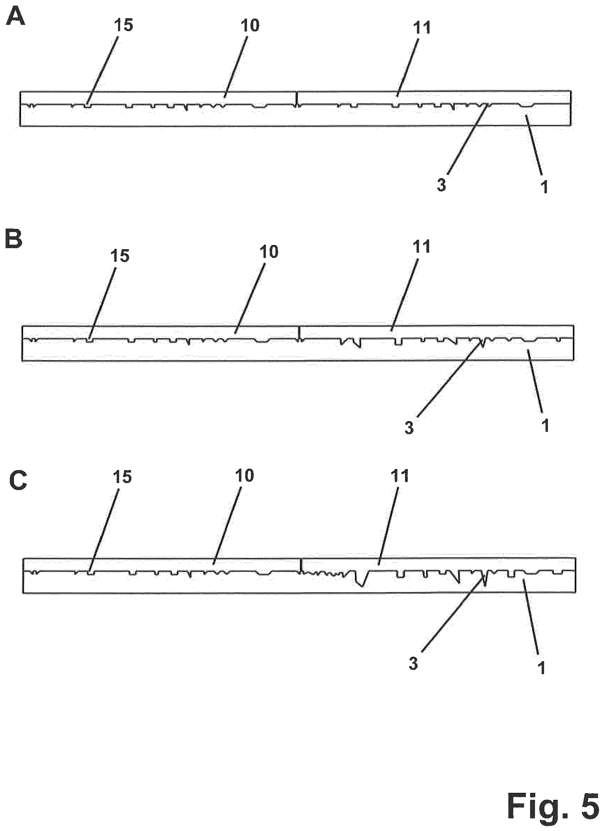

In Fig. 5 ist eine weitere Ausführungsvariante eines Sicherheitselementes 1 zur Durchführung des erfindungsgemäßen Authentifikationssystems gezeigt. Auch hier dient eine strukturierte Oberfläche als Sicherheitsmerkmal. Die Oberfläche des starren Sicherheitsmerkmals ist von einem Schutzlack 10 überzogen, der bewirkt, dass sich die darunter liegende Struktur 15 nicht verändert. Die Oberfläche des dynamischen Sicherheitsmerkmals 3 ist von einem Aktivierungslack 11 überzogen, der die darunter liegende Struktur verändert, beispielsweise durch physikalische oder chemische Wechselwirkungen. In Fig. 5A ist der Ausgangszustand gezeigt. Schutzlack 15 und Aktivierungslack 11 überdecken die darunter liegende Oberfläche mit den darin ausgebildeten Strukturen und Profilen. In Fig. 5C führt der Aktivierungslack 11 zu einer Veränderung des darunter liegenden Profils, während die Oberfläche, die mit dem Schutzlack 15 überzogen ist, unverändert bleibt. In Fig. 5C ist eine dynamische Weiterentwicklung gezeigt, bei der die bereits ausgebildeten Strukturen im dynamischen Sicherheitsmerkmal 3 (Fig. 5B) sich weiterentwickelt haben.

In einer weiteren, nicht hier gezeigten Variante kann vorgesehen sein, dass die Weiterentwicklung der strukturierten Oberfläche erst dann erfolgt, wenn der Schutzlack 10abgetragen oder entfernt wird. Bei einer solchen Variante würde die Struktur so lange erhalten bleiben, wie der Schutzlack 10 die strukturierte Oberfläche überdeckt. Die dynamische Entwicklung der Profile und Strukturen in der Oberfläche erfolgt erst dann, wenn der Schutzlack10 teilweise oder vollständig entfernt ist. Durch erneutes Auftragen eines Schutzlackes kann dieser Prozess auch wieder gestoppt werden.

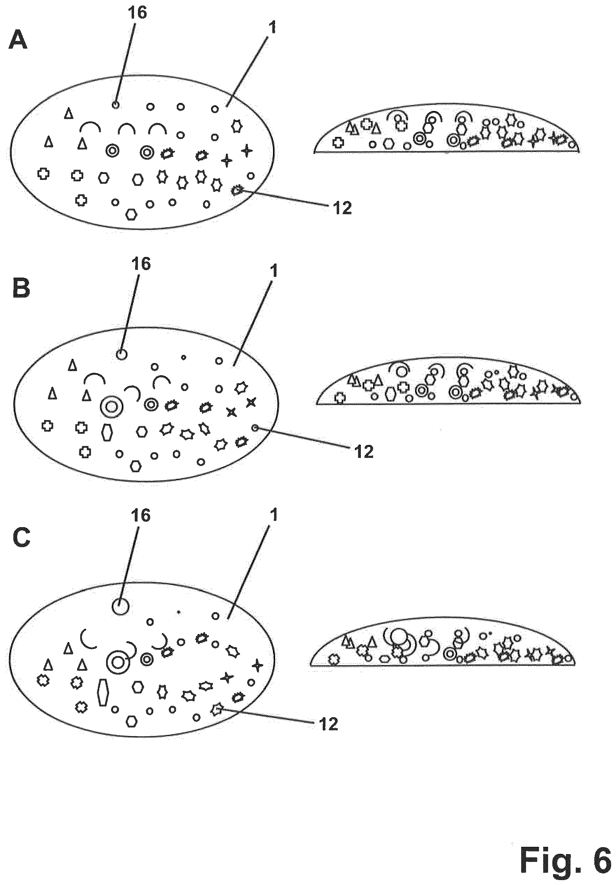

In Fig. 6 ist eine weitere Variante gezeigt, bei der Körper und Hohlräume mit individuellen Eigenschaften in einem Material oder Stoff vorhanden sind. Das Material in Fig. 6 beinhaltet Hohlräume 16 und/oder Partikel 12. Die Hohlräume können beispielsweise durch Lufteinschlüsse oder Gas gebildet werden. Die Partikel 12 sind vorzugsweise magnetische Partikel. Die individuellen Eigenschaften der Hohlräume 16 oder Partikel 12bestimmen das Muster des Sicherheitselementes 1. Die Hohlräume 16 und/oder Partikel 12 können die Form und die Position ändern. Ferner ist ein Drehen der Partikel 12 denkbar. In Fig. 6A ist der Ausgangszustand gezeigt. Auf der linken Seite erkennt man die Aufsicht, auf der rechten Seite den Querschnitt. Unterschiedliche Geometrien von Partikeln 12 und Hohlräumen 16 sind in dem Material angeordnet. In Fig. 6B ist ein dynamischer Zustand gezeigt, bei dem sich die einzelnen Hohlräume 16 und Partikel 12 ändern, insbesondere deren Form, Drehrichtung und Position. Solche Änderungen können beispielsweise durch Wechselwirkungen zwischen den Einschlüssen und Leerräumen untereinander, durch die natürliche Gravitation, durch eine Bewegung des Sicherheitselementes 1 oder durch andere interne und/oder externe Einflüsse bewirkt werden. In Fig. 6C ist dieser Zustand weiterentwickelt, so erkennt man im Querschnitt rechts, dass die Partikel nach unten gezogen werden. Im Fall von magnetischen Partikeln 12 kann dies beispielsweise über einen Magneten erfolgen, der auf der Unterseite des Sicherheitselementes 1 angebracht ist.

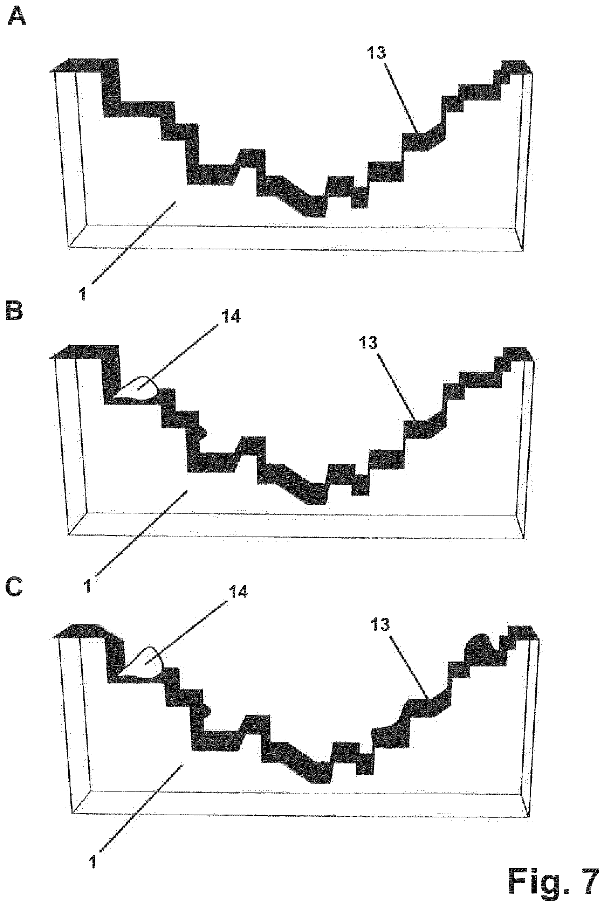

In Fig. 7 ist ein dynamisch veränderliches Material gezeigt. Das gezeigte Material ist gekennzeichnet durch eine treppenartige Struktur 13, wobei Fig. 7A den Ausgangszustand darstellt. In Fig. 7B ist der dynamisch veränderte Zustand zu einem ersten Zeitpunkt dargestellt. Hier erkennt man, dass zusätzliches Material 14 bei einigen Elementen der Treppenstruktur hinzugekommen ist. In Fig. 7C hat sich dieses Material weiterentwickelt, wodurch ein dynamisch veränderbares Sicherheitselement 1 geschaffen wurde.

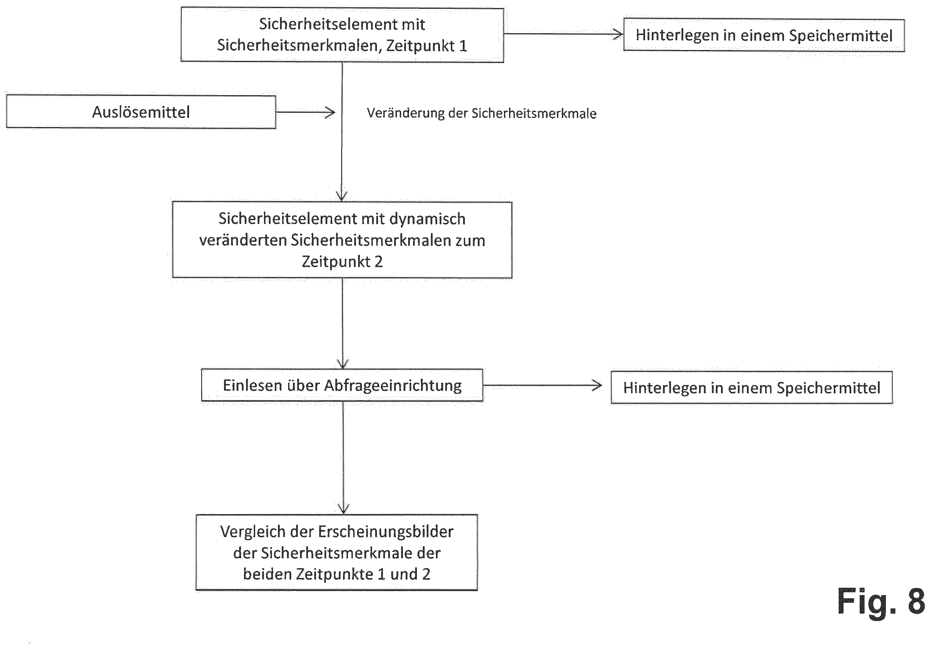

In Fig. 8 ist das erfindungsgemäße Authentifikationssystem schematisch dargestellt. Zunächst wird ein Sicherheitselement 1 zur Verfügung gestellt, das eine sich veränderbare Oberfläche, Struktur, Zusammensetzung oder Zeichenfolge aufweist. Umfasst das Sicherheitselement eine oder mehrere Zeichenfolgen, so können Drehrichtung, Ort, Position, Farbe, Größe und andere Parameter gewählt werden Die Zeichenfolge kann Symbole, Buchstaben, Ziffern oder sonstige Zeichen umfassen. Das Auslösemittel führt dazu, dass sich diese Parameter in einer oder mehreren Zeichenfolgen verändern. Ein Abtastmittel erfasst zu einem Zeitpunkt das Erscheinungsbild der für die Authentifikation relevanten Zeichenfolgen und vergleicht diese mit der zuletzt in der Datenbank hinterlegten Zeichenfolge.

Generell wird von einem Sicherheitselement mit einzelnen Sicherheitsmerkmalen ausgegangen, die ein bestimmtes Erscheinungsbild zu einem Zeitpunkt 1 besitzen. Dieses Sicherheitselement ist einer Person, einem Medium oder einem Gegenstand zugeordnet und wird in einem Speichermittel, vorzugsweise in digitaler Form, hinterlegt. Ein Auslösemittel, das vorzugsweise selbst dynamisch ist, verändert Teile oder alle Sicherheitsmerkmale des Sicherheitselementes. Dadurch entsteht ein Sicherheitselement mit dynamisch veränderten Sicherheitsmerkmalen zu einem Zeitpunkt 2. Diese Sicherheitsmerkmale werden über eine Abfrageeinrichtung eingelesen und entweder in einem Speichermittel für eine spätere Abfrage hinterlegt oder gleich über ein Datenabgleichmittel miteinander verglichen. Liegt eine durch das Auslösemittel vermittelte dynamische Veränderung der Sicherheitsmerkmale vor, so ist die Person, das Medium oder der Gegenstand positiv authentifiziert.

## Patentansprüche

1. Authentifikationssystem, bei dem ein Sicherheitselement (1) in ein dynamisches Sicherheitselement (1) umgewandelt wird, umfassend
- ein Sicherheitselement (1) mit einer sich verändernden oder veränderbaren Oberfläche (6), Struktur, Volumen, Zusammensetzung oder Zeichenfolge als Sicherheitsmerkmale,
- ein Zuordnungsmittel, welches das Sicherheitselement (1) einer Person, einem Gegenstand, einem Medium oder einer Gruppe von diesen zuordnet,
- ein lokales oder zentrales Speichermittel zum Hinterlegen eines Sicherheitsmerkmals,
- eine Abfrageeinrichtung zum Abrufen eines aktuellen Erscheinungsbildes des Sicherheitsmerkmals,
- ein Datenabgleichmittel zum Vergleichen des abgerufenen Erscheinungsbildes mit dem in dem lokalen oder zentralen Speichermittel hinterlegten Erscheinungsbild des Sicherheitselementes (1), wobei das Sicherheitselement (1) eine innere oder äußere Struktur, ein Volumen oder eine Stoffzusammensetzung aufweist, die für eine Abtasteinrichtung ein spezifisches Erscheinungsbild liefert, wobei das aktuelle Erscheinungsbild für eine Abfrage durch die Abfrageeinrichtung verfügbar und in dem lokalen oder zentralen Speichermittel hinterlegbar ist, **dadurch gekennzeichnet, dass** ein physikalisches oder chemisches Auslösemittel vorgesehen ist, das eine zumindest bereichsweise Veränderung einer Oberfläche (6), Struktur oder Eigenschaft des Sicherheitselementes (1) bewirkt, wodurch ein dynamisch verändertes Sicherheitselement (1) entsteht, bei dem das Erscheinungsbild des ersten Zeitpunktes im Vergleich zum Erscheinungsbild des zweiten Zeitpunktes zumindest teilweise verändert ist.

2. Authentifikationssystem nach Anspruch 1, **dadurch gekennzeichnet, dass** es sich bei dem Medium um ein Dienstbereitstellungssystem, Daten, einen Datenträger, eine Software oder eine Zeichenfolge handelt.

3. Authentifikationssystem nach einem der Ansprüche 1 oder 2, **dadurch gekennzeichnet, dass** das Sicherheitselement (1) aus statischen, sich nicht veränderbaren Sicherheitsmerkmalen (4) und sich dynamisch veränderbaren Sicherheitsmerkmalen (3) besteht, deren Profil, Struktur, Zusammensetzung oder Erscheinungsbild sich dann verändert, wenn das Auslösemittel einen festgelegten physikalischen oder chemischen Wert erreicht.

4. Authentifikationssystem nach einem der Ansprüche 1 bis 3, **dadurch gekennzeichnet, dass** das Sicherheitselement aus einem dehnbaren Material besteht, in dem dynamische Sicherheitsmerkmale (3) wie Risse, Sprünge oder Ausnehmungen ausgebildet sind, deren Durchmesser oder Profil sich entsprechend der Dehnung, Stauchung oder Biegung des Materials verändert.

5. Authentifikationssystem nach einem der Ansprüche 1 bis 3, **dadurch gekennzeichnet, dass** das Sicherheitselement (1) eine erste Oberfläche mit Zacken oder scharfen Kanten (5) aufweist, die bei Bewegung um eine an dem Sicherheitselement (1) ausgebildete Drehachse (7) in eine benachbarte zweite Oberfläche (6) greifen und deren Struktur verändern.

6. Authentifikationssystem nach einem der Ansprüche 1 bis 3, **dadurch gekennzeichnet, dass** beim Sicherheitselement (1) eine erste Oberfläche (6) mit darin integrierten statischen Sicherheitsmerkmalen (15) und eine zweite Oberfläche mit darin integrierten dynamisch veränderbaren Sicherheitsmerkmalen (3) vorgesehen ist, wobei unterhalb der ersten Oberfläche (6) des Sicherheitselementes (1) eine starre Basis (8) und unterhalb der zweiten Oberfläche des Sicherheitselementes (1) eine flexible Basis (8) ausgebildet ist, wobei die flexible Basis (8) bei Aktivierung durch das Auslösemittel die darüber liegenden dynamischen Sicherheitsmerkmale verändert.

7. Authentifikationssystem nach einem der Ansprüche 1 bis 3, **dadurch gekennzeichnet, dass** beim Sicherheitselement (1) eine erste Oberfläche (6) mit darin integrierten statischen Sicherheitsmerkmalen (15) und eine zweite Oberfläche mit darin integrierten dynamisch veränderbaren Sicherheitsmerkmalen (3) vorgesehen ist, wobei die erste Oberfläche (6) mit einer Schutzschicht (10) und die zweite Oberfläche (3) mit einer Aktivierungsschicht (11) überzogen ist.

8. Authentifikationssystem nach einem der Ansprüche 1 bis 3, **dadurch gekennzeichnet, dass** das Sicherheitselement (1) aus einem Material besteht, in dem sich verformbare und/oder bewegbare Hohlräume (16) und/oder partikuläre Körper (12) befinden, deren geometrisches Profil, die durch Bewegung zurückgelegte Strecke, Drehrichtung, Position und/oder Erscheinungsbild nach Aktivierung des Auslösemittels veränderbar ist/sind.

9. Authentifikationssystem nach einem der Ansprüche 1 bis 3, **dadurch gekennzeichnet, dass** das Sicherheitselement (1) eine oder mehrere Oberfläche(n) (13) oder ein Volumen innerhalb einer dreidimensionalen Struktur umfasst, die/das dynamisch veränderbar ist/sind.

10. Authentifikationssystem nach einem der Ansprüche 1 bis 3, **dadurch gekennzeichnet, dass** das Sicherheitselement (1) eine Anordnung von mehreren Zeichen umfasst, deren Position, Drehrichtung, Größe, Form und/oder Farbe durch das Auslösemittel veränderbar ist/sind.

11. Authentifikationssystem nach einem der Ansprüche 1 bis 10, **dadurch gekennzeichnet, dass** sich das Auslösemittel selbst dynamisch verändert.

12. Authentifikationssystem nach einem der Ansprüche 1 bis 10, **dadurch gekennzeichnet, dass** eine Veränderung der dynamischen Sicherheitsmerkmale des Sicherheitselementes bei einem physikalischen Parameter als Auslösemittel nur dann erfolgt, wenn bestimmte Bedingungen oder Parameter vorliegen.

13. Authentifikationssystem nach Anspruch 12, **dadurch gekennzeichnet, dass** es sich bei den Bedingungen um die Dauer oder die Amplitude eines Impulses handelt, der über Sensoren erfasst und an die entsprechende Aktivierungseinrichtung übergeben wird.

14. Authentifikationssystem nach Anspruch 1, **dadurch gekennzeichnet, dass** der Parameter die Temperatur, Luftdruck, Luftfeuchtigkeit, die Farbänderung eines Farbstoffes, oder auch Parameter wie Reibung oder Bewegung ist.

## Claims

1. An authentication system in which a security element (1) is converted into a dynamic security element (1) comprising
- a security element (1) with a changing or modifiable surface (6), structure, volume, composition or character sequence as security features,
- an assignment means which assigns the security element (1) to a person, an object, a medium or a group of these,
- a local or central storage means for depositing a security feature,
- an interrogator to retrieve a current appearance of the security feature,
- a data matching means for comparing the retrieved appearance with the appearance of the security element (1) stored in the local or central storage means, wherein the security element (1) has an inner or outer structure, volume or composition of matter which provides a specific appearance for a scanning device, wherein the current appearance is available for retrieval by the scanning device and is storable in the local or central storage means, **characterized in that** a physical or chemical triggering means is provided, which causes an at least partial change of a surface (6), structure or property of the security element (1), resulting in a dynamically changed security element (1) in which the appearance of the first point in time is at least partially changed in comparison with the appearance of the second point in time.

2. Authentication system according to claim 1, **characterized in that** the medium is a service provision system, data, data carrier, software or character sequence.

3. Authentication system according to one of claims 1 or 2, **characterized in that** the security element (1) consists of static, non-changeable security features (4) and dynamically changeable security features (3), the profile, structure, composition or appearance of which changes when the trigger means reaches a predetermined physical or chemical value.

4. Authentication system according to one of claims 1 to 3, **characterized in that** the security element consists of an extensible material in which dynamic security features (3) such as cracks, jumps or recesses are formed, the diameter or profile of which changes according to the extension, compression or bending of the material.

5. Authentication system according to one of claims 1 to 3, **characterized in that** the security element (1) has a first surface with serrations or sharp edges (5) which, when moved about an axis of rotation (7) formed on the security element (1), engage in an adjacent second surface (6) and change its structure.

6. Authentication system according to one of claims 1 to 3, **characterized in that** a first surface (6) with static security features (15) integrated therein and a second surface with dynamically changeable security features (3) integrated therein are provided on the security element (1), wherein a rigid base (8) is formed below the first surface (6) of the security element (1) and a flexible base (8) is formed below the second surface of the security element (1), the flexible base (8) changing the overlying dynamic security features when activated by the trigger means.

7. Authentication system according to one of claims 1 to 3, **characterized in that** a first surface (6) with static security features (15) integrated therein and a second surface with dynamically changeable security features (3) integrated therein is provided in the security element (1), the first surface (6) being covered with a protective layer (10) and the second surface (3) being covered with an activation layer (11).

8. Authentication system according to any one of claims 1 to 3, **characterized in that** the security element (1) is made of a material in which there are deformable and/or movable cavities (16) and/or particulate bodies (12) whose geometric profile, the distance covered by movement, direction of rotation, position and/or appearance is/are changeable after activation of the trigger means.

9. Authentication system according to any one of claims 1 to 3, **characterised in that** the security element (1) comprises one or more surface(s) (13) or volume within a three-dimensional structure which is/are dynamically changeable.

10. Authentication system according to one of claims 1 to 3, **characterised in that** the security element (1) comprises an arrangement of several characters, the position, direction of rotation, size, shape and/or colour of which is/are changeable by the triggering means.

11. Authentication system according to one of claims 1 to 10, **characterized in that** the trigger means itself changes dynamically.

12. Authentication system according to one of claims 1 to 10, **characterized in that** a change in the dynamic security features of the security element in the case of a physical parameter as trigger means only occurs if certain conditions or parameters are present.

13. Authentication system according to claim 12, **characterized in that** the conditions are the duration or the amplitude of a pulse which is detected by sensors and transmitted to the corresponding activation device.

14. Authentication system according to claim 1, **characterized in that** the parameter is the temperature, air pressure, air humidity, the colour change of a dye, or also parameters such as friction or movement.

## Revendications

1. Système d'authentification dans lequel un élément de sécurité (1) est converti en un élément de sécurité (1) dynamique, comprenant
- un élément de sécurité (1) comportant, en tant que caractéristiques de sécurité, une surface (6), une structure, un volume, une composition ou une suite de caractères variant(e) ou variable,
- un moyen d'attribution qui attribue ledit élément de sécurité (1) à une personne, à un objet, à un vecteur, ou à un groupe de ces derniers,
- un moyen de stockage localisé ou centralisé, affecté à la mémorisation d'une caractéristiques de sécurité,
- un dispositif d'interrogation affecté à la récupération d'un aspect visuel en temps réel de ladite caractéristiques de sécurité,
- un moyen de croisement de données, affecté à la comparaison de l'aspect visuel récupéré avec l'aspect visuel de l'élément de sécurité (1) mémorisé dans ledit moyen de stockage localisé ou centralisé, ledit élément de sécurité (1) présentant une structure intérieure ou extérieure, un volume ou une composition matérielle qui fournit un aspect visuel spécifique destiné à un dispositif de balayage exploratoire, ledit aspect visuel en temps réel étant disponible en vue d'une interrogation par ledit dispositif d'interrogation, et pouvant être mémorisé dans ledit moyen de stockage localisé ou centralisé, **caractérisé par le fait qu'**il est prévu un moyen déclencheur physique ou chimique qui provoque une modification, au moins par zones, d'une surface (6), d'une structure ou d'une propriété de l'élément de sécurité (1) en créant, de la sorte, un élément de sécurité (1) dynamiquement modifié dans lequel l'aspect visuel du premier point instantané est modifié, au moins en partie, comparativement à l'aspect visuel du second point instantané.

2. Système d'authentification selon la revendication 1, **caractérisé par le fait que** le vecteur revêt la forme d'un système de prestation de services, de données, d'un support de données, d'un logiciel ou d'une suite de caractères.

3. Système d'authentification selon l'une des revendications 1 ou 2, **caractérisé par le fait que** l'élément de sécurité (1) est constitué par des caractéristiques de sécurité (4) statiques, non modifiables, et par des caractéristiques de sécurité (3) dynamiquement modifiables dont le profil, la structure, la composition ou l'aspect visuel varie lorsque le moyen déclencheur atteint une valeur physique ou chimique fermement établie.

4. Système d'authentification selon l'une des revendications 1 à 3, **caractérisé par le fait que** l'élément de sécurité consiste en un matériau extensible dans lequel sont formées des caractéristiques de sécurité (3) dynamiques telles que des fissures, des criques ou des évidements dont le diamètre ou le profil varie en concordance avec l'extension, la compression ou la flexion dudit matériau.

5. Système d'authentification selon l'une des revendications 1 à 3, **caractérisé par le fait que** l'élément de sécurité (1) est muni d'une première surface comportant des dentelures ou des arêtes vives (5) qui, lors d'un mouvement autour d'un axe de rotation (7) ménagé sur ledit élément de sécurité (1), pénètrent dans une seconde surface voisine (6) et modifient la structure de cette dernière.

6. Système d'authentification selon l'une des revendications 1 à 3, **caractérisé par le fait qu'**une première surface (6), dans laquelle sont intégrées des caractéristiques de sécurité (15) statiques, et une seconde surface dans laquelle des caractéristiques de sécurité (3) dynamiquement modifiables sont intégrées, sont prévues dans l'élément de sécurité (1), une base rigide (8) et une base flexible (8) étant formées, respectivement, au-dessous de la première surface (6) de l'élément de sécurité (1) et au-dessous de la seconde surface dudit élément de sécurité (1), sachant que ladite base flexible (8) modifie les caractéristiques de sécurité dynamiques sus-jacentes lors d'une activation par le moyen déclencheur.

7. Système d'authentification selon l'une des revendications 1 à 3, **caractérisé par le fait qu'**une première surface (6), dans laquelle sont intégrées des caractéristiques de sécurité (15) statiques, et une seconde surface dans laquelle des caractéristiques de sécurité (3) dynamiquement modifiables sont intégrées, sont prévues dans l'élément de sécurité (1), ladite première surface (6) et ladite seconde surface étant revêtues, respectivement, d'une couche de protection (10) et d'une couche d'activation (11).

8. Système d'authentification selon l'une des revendications 1 à 3, **caractérisé par le fait que** l'élément de sécurité (1) consiste en un matériau dans lequel se trouvent des cavités (16) déformables et/ou mobiles et/ou des corps particulaires (12) dont le profil géométrique, le trajet parcouru sous l'effet d'un mouvement, le sens de rotation, l'emplacement et/ou l'aspect visuel peu(ven)t être modifié(s) après activation du moyen déclencheur.

9. Système d'authentification selon l'une des revendications 1 à 3, **caractérisé par le fait que** l'élément de sécurité (1) inclut, à l'intérieur d'une structure tridimensionnelle, une ou plusieurs surface(s) ou un volume pouvant être dynamiquement modifié(e)(s).

10. Système d'authentification selon l'une des revendications 1 à 3, **caractérisé par le fait que** l'élément de sécurité (1) inclut un agencement de plusieurs caractères dont l'emplacement, le sens de rotation, la taille, la forme et/ou la couleur peu(ven)t être modifié(e)(s) par le moyen déclencheur.

11. Système d'authentification selon l'une des revendications 1 à 10, **caractérisé par le fait que** le moyen déclencheur proprement dit varie dynamiquement.

12. Système d'authentification selon l'une des revendications 1 à 10, **caractérisé par le fait que**, lorsque le moyen déclencheur est constitué d'un paramètre physique, une modification des caractéristiques de sécurité dynamiques de l'élément de sécurité s'opère uniquement en présence de conditions ou de paramètres déterminé(e)s.

13. Système d'authentification selon la revendication 12, **caractérisé par le fait que** les conditions se présentent comme la durée ou l'amplitude d'une impulsion détectée par des capteurs et transférée au dispositif d'activation correspondant.

14. Système d'authentification selon la revendication 1, **caractérisé par le fait que** le paramètre est la température, la pression de l'air, l'humidité de l'air, la variation de couleur d'un colorant, voire également des paramètres tels que le frottement ou le mouvement.
